# EUROPEAN PATENT APPLICATION

(11) **EP 1 053 926 A2**
(43) Date of publication of application: **22.11.2000**
(21) Application number: 00660087.8
(22) Date of filing: 17.05.2000
(51) Int. Cl.: B62B 3/02

(54) **Cleaning cart**

(30) Priority: 19.05.1999 FI 991143
(71) Applicant: Freudenberg Household Products Oy Ab, 24100 Salo (FI)
(72) Inventor: Siikonen, Jyrki, Freudenberg Household Prod. Oy AB, 24100 Salo (FI)
(74) Representative: Helino, Timo Kalervo

(57) **Abstract**

Cleaning cart for cleaning equipment to be carried along by a cleaner, said cleaning cart comprising of a wheeled frame with spaces for cleaning equipment. The frame of the cleaning cart comprises of a substantially rectangular base (1) having longer left and right side edges (2, 3) and shorter rear edge (4) and front edge (5). In addition, a back frame (6) is mounted in an upright position on the base near the rear edge, and a partition frame (7) perpendicular to the back frame and base, dividing the area in front of the back frame into two unequal parts, a first and a second cleaning equipment space (8, 9).

## Description

The present invention relates to a cleaning cart as defined in the preamble of claim 1.

A cleaning cart is a general-purpose tool used by a cleaner to carry along all the equipment needed in cleaning work, such as various wipers and washers, vessels and wash water, various cleaning chemicals, the litter and waste to be collected and removed, new paper towels and other papers, etc. As the above list implies, the cleaning cart must be capable of carrying many different kinds of equipment and material associated with cleaning. In addition, this equipment and material must be well exposed and available for use, so their placement and suspension in and attachment to the cleaning cart are subject to great requirements regarding functionality. These requirements are further restricted by the fact that the cleaning cart must be as small and light as possible to allow it to be easily moved even in small elevators and corridors.

Traditionally, cleaning carts consist of netlike structures made of steel or plastic, in other words, open frames or ribs supported on a relatively open or gridded base and provided with various hooks and holders for holding or supporting baskets, decks or frames of net or wire structure. Using this type of open structures, it has been possible to produce extremely light cleaning carts that are easy to move about. They also have an airy structure, which has been designed to achieve a cart that is hygienic and easy to clean.

At present, cleaning carts are also manufactured from plastic by injection-molding, in which case the entire cart and possibly even all the enclosures, brackets and holders are parts of one and the same continuous molding. Because of the manufacturing technique, the resulting carts are of a relatively heavy appearance, difficult to modify for different uses and, being manufactured in relatively small production lots, they are also expensive.

However, prior-art cleaning carts have certain drawbacks. Since different places to be cleaned require different cleaning equipment, there must also be different cleaning carts for different needs. Therefore, because of the demand and competition, each manufacturer of cleaning carts must have a large number of different cart constructions in regular production. Thus, the production series of individual models remain small, the products are expensive and require plenty of storage space. In addition, the prior-art cleaning carts are relatively big and difficult to handle, provided that a varied range of cleaning equipment and material is wished to be carried along in them.

The objective of the invention is to eliminate the drawbacks referred to above. One specific objective of the invention is to disclose a new type of cleaning cart, which allows versatile use and modification for different purposes and which regardless of the small dimensions may be provided with an extremely varied range of cleaning equipment, materials and preparations.

As for the features characteristic of the invention, reference is made to them in the claims.

The cleaning cart of the invention comprises of a frame provided with wheels and spaces for cleaning equipment and materials. According to the inventor, the frame comprises of a substantially rectangular base having longer left and right side edges and shorter front and rear edges. In addition, the frame comprises of a back frame mounted in an upright position on the base near the rear edge and parallel to it, and a partition frame perpendicular to the back frame and base, the partition being arranged to divide the base area in front of the back frame into two unequal parts, a first cleaning equipment space and a second cleaning equipment space.

The back frame is preferably mounted on the base at a suitable distance from the rear edge of the base so that a third cleaning equipment space is formed above the base behind the back frame. Thus, preferably at least the back surface of the back frame, but possibly also the front surface of the back frame, is provided with suitable holding devices for cleaning equipment, such as bars, hooks, clasps or suitable holes, permitting various equipment or holders or brackets for equipment to be fastened to them.

In an embodiment of the invention, the base, the back frame and the partition frame, or at least some of them, consist of a rigid framework, a rectangular supporting structure, which may be provided with different intermediate supports. In this way, various holding devices for cleaning equipment may be fastened directly to the framework.

In another embodiment of the invention, both, the back frame and the partition frame are, like the base, solid and flat planar surfaces, so they will not gather dust and other impurities and are easy to wipe and keep clean.

In a third embodiment of the invention, at least one, but preferably all, the base, back frame and partition frame is/are made of a netlike or perforated structure, perforated plate or equivalent, in which case the perforations and apertures directly constitute holding devices for cleaning equipment. Both, the perforated plate and the netlike structure, permit free placement of the holding devices for cleaning equipment. In this way, the user of the cleaning cart may place different holders and hangers in different perforations and apertures. Similarly, in case of changed needs, the user may change the places of the holders or substitute them with other ones.

Preferably all, the solid base, back frame and partition frame are made of coated cellular polystyrene board. The coating on both sides of the board is preferably a suitable plastic sheet, but it is also possible to use other materials that will render the lamellar structure sufficiently rigid while it still remains light. Thus, the surface material may consist of e.g. thin aluminum sheet. Various other lamellar sheet structures that are sufficiently rigid and light, such as a cellular structure or polyurethane center forming the interior part of the plate, may also be used.

The substantial part of the invention is the partition frame, may it be a sheer frame, netlike structure, perforated plate, solid plate etc., which in the longitudinal direction of the cleaning cart divides the space or area on the base into two unequal cleaning equipment spaces. Thus, choosing the places for various equipment, such as wash buckets, mop washers etc., in the cleaning equipment spaces, all the equipment and materials may be placed inside the area defined by the base.

As compared with prior-art solutions, the cleaning cart of the invention has significant advantages. The same inventive basic cleaning cart component can be modified and applied for various uses only by providing the surfaces of the upright plates with different holding devices and supporters. This obviates the need to produce a large number of different cleaning cart frame structures, which are typical of prior-art solutions. In addition, as the place of the partition frame is in the lateral direction of the cleaning cart easy to change, choose or freely adjustable, vessels of different sizes may be placed in the cleaning cart just by adjusting the partition frame. In this way, also the second cleaning equipment space on the other side of the partition frame may be made as large and effectively used as possible and there will be no waste space in the cleaning cart on the side of the vessels.

In the following section, the structures of and structural alternatives for the cleaning cart of the invention will be described in detail with reference to the attached drawings, wherein
Fig. 1 represents cleaning cart of the invention in an oblique rear view, and
Fig. 2 represents another cleaning cart of the invention in an oblique rear view.
Fig. 3 represents cleaning cart of figure 2 in an oblique front view.

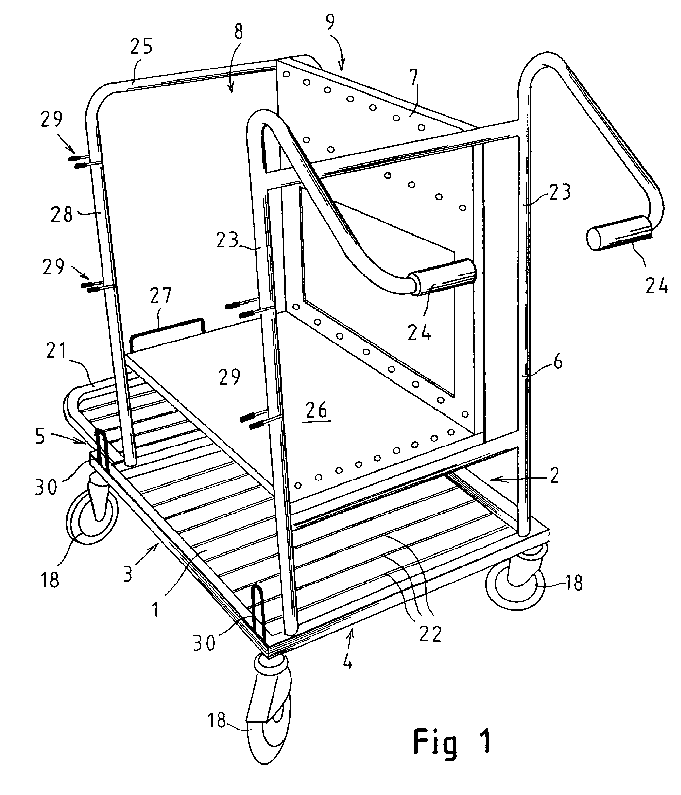

Figure 1 represents a cleaning cart of the invention comprising of a substantially rectangular base 1 provided with wheels 18 attached to its lower surface in the area of each corner. The base comprises of a right side edge 2 and a left side edge 3, which are the longer sides, and a rear edge 4 and a front edge 5, which are shorter than the side edges. The edges of the base form a rigid frame and the side edges of the frame are attached to each other with a set of intermediate bars 22. Thus, the cleaning cart is having a grid-like base.

Mounted near the rear edge 4 of the base 1 is an upright and substantially rectangular back frame 6, i.e. a rigid frame the upright edge poles 23 of which stretch to the back, slightly bending at the top, and obliquely downward and toward each other, forming the push handles 24 of the cleaning cart. A front frame 25 corresponding to the back frame 6 is mounted on the front edge 5 of the base 1.

A partition frame 7, i.e. plate-like partition wall is implemented in between the front frame 25 and the back frame 6 mounted on both of them. The partition frame is in a position perpendicular to both the front frame and the back frame and likewise substantially perpendicular to the base 1. In addition, the partition frame 7 is mounted on the front frame and the back frame in such a way that the partition frame 7 defines between the front frame and the back frame two substantially unequal areas or spaces, i.e. a first cleaning equipment space 8 and a second cleaning equipment space 9. In this way, bigger cleaning equipment, such as buckets may be placed in the cleaning equipment space 8.

Moreover, in an embodiment of figure 1 the first cleaning equipment space 8 is divided heightwise with an intermediate floor 26 in such a way that with the buckets being placed on the intermediate floor, there will remain a suitable place underneath it also for other equipment. The intermediate floor may be made, e.g. of a perforated plate, as partly shown in the drawings. Similarly, the partition frame 7 may be made of a perforated plate or it may be provided with different sizes of perforations and apertures permitting different kinds of hooks, baskets or other hangers for cleaning equipment to be fastened to them on both sides of the partition frame. Also the front frame 25 and the back frame 6 may be provided with different kinds of bars, hooks or equivalent, or different kinds of brackets or baskets or like equipment for cleaning purposes may be directly fastened to them. The aforementioned accessories are, however, not shown in the drawings, in order to present the main idea of the invention more clearly.

In addition, the partition frame 7 may be adjustable in the direction of the breadth of the cleaning cart and it may be placed at the required position in such a way that the sizes of the first cleaning equipment space 8 and the second cleaning equipment space 9 may be adjusted. In this way, the bigger cleaning equipment space may be adjusted to correspond to the size of the vessels used in cleaning, in which case the volume of the second cleaning equipment space 9, and therefore its use, may be maximized.

An extension frame 21 is hinged on the front edge 5 of the base 1. The extension frame is also of a substantially rectangular shape and somewhat narrower than the front edge 5 of the base. Like the base 1, also the extension frame consists of a rigid framework and intermediate bars. When an extension frame is used, it can be lowered to a horizontal position, as shown in figure 1, thus allowing the space formed above it to be used for carrying materials and equipment needed in cleaning work. When the extension frame is not in use, it can be raised to an upright position against the front edge 25. In addition to that, a support 27 is mounted on the front edge of the extension frame to prevent the things kept on it from dropping. Same kind of supporting ribs may also be mounted on the sides of the extension frame.

Two mop holders are attached to the cleaning cart of figure 1 to serve as fixed holders for cleaning equipment. The other edge poles 23 and 28 of both, the back frame 6 and the front frame 25 are provided with two support forks 29. The support forks and the enlargements at their both ends are dimensioned in such a way that the handle of the mop washer may be tightened in between the support forks and pulled away from it, when needed. For the washing part of the mop, there are support ribs 30 mounted on base 1 in the vicinity of the bottom of the edge poles 23 and 28. In this way, there is an aperture or space forming in between the support ribs 30 and the corresponding edge poles 23 and 28 whereto the washing part of the mop propped against the base 1 may be placed, while the handle of the mop is tightened in between the support forks.

As described above, the mops may be carried along in the cleaning cart so that they at least breadth-wise will fit into the space defined by the base 1 without protruding outside it. In the same way, also the other baskets, hooks, bars and holders of the cleaning cart make it possible to carry along different equipment and materials in the cleaning cart as an assembly as compact as possible, in which case the cleaning cart as being of small dimensions may be easily moved even in small spaces, such as elevators.

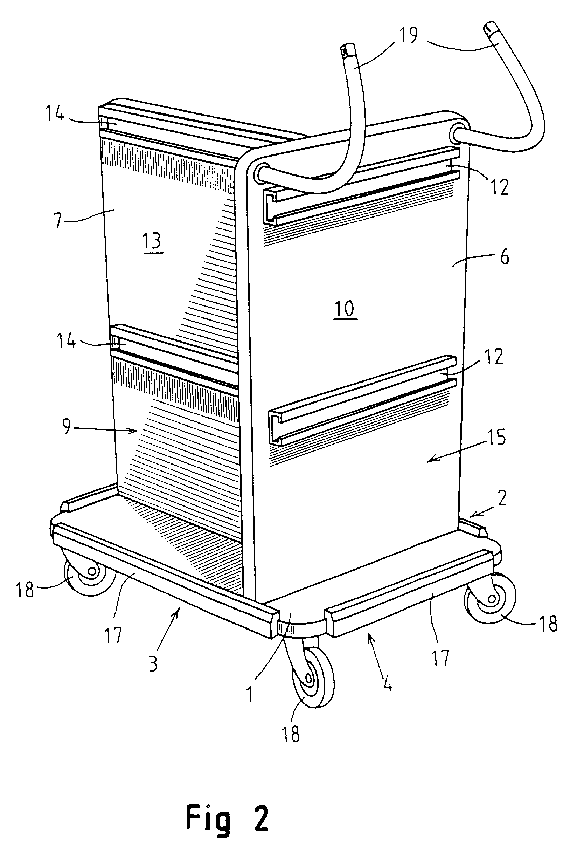

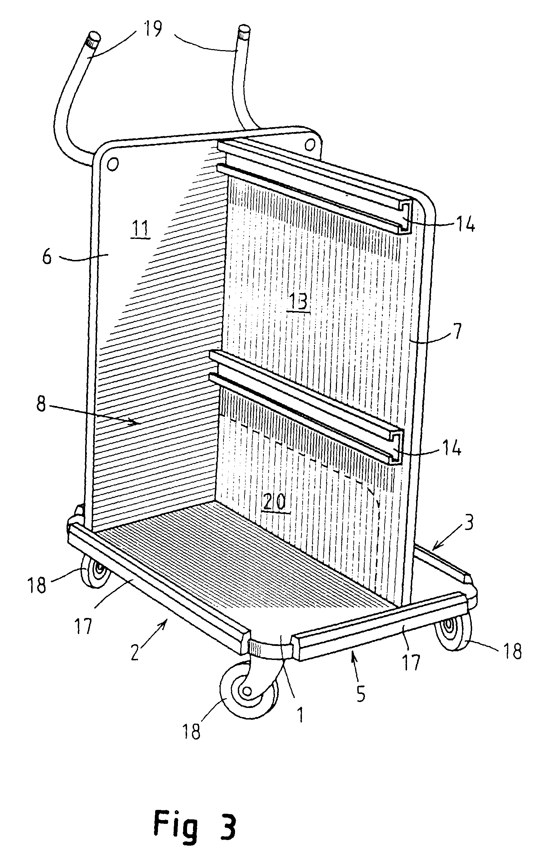

A second cleaning cart of the invention, as presented in figures 2 and 3, comprises of a substantially rectangular base 1 made of plastic-coated cellular polystyrene board and provided with wheels 18 attached to its lower surface in the area of each corner. The base comprises of a right side edge 2 and a left side edge 3, which are the longer sides, and a rear edge 4 and a front edge 5, which are shorter than the side edges. Attached to each one of the four edges is a fillet 17, which rises somewhat above the top surface of the base 1.

Mounted near the rear edge 4 of the plate serving as the base 1 in an orientation parallel to the rear edge is an upright and substantially rectangular back frame 6, which is made of the same solid board type material as the base. Moreover, the base area in front of the back frame is divided into two parts unequal in width by a rectangular partition frame 7 of the same material with the base and the back frame and it is mounted in a position perpendicular to both of the plates. Its height corresponds to the height of the back frame and it extends lengthways from the back frame to the front edge 5 of the base.

Thus, above the base 1 in front of the back frame 6 and on the side of the right side edge 2 of the partition frame 7, a first cleaning equipment space 8 is formed, while on the other side of the partition frame 7 a smaller or narrower cleaning equipment space 9 is formed. In addition, a third cleaning equipment space 15 is formed behind the back frame 6 and above the base 1.

The depth of the first cleaning equipment space 8 substantially corresponds to the depth of the buckets used in cleaning work so that the buckets will fit into this space without protruding outside the right edge side 2. Attached to the side surface 13 of the partition frame 7 in the first cleaning equipment space 8 are two holding devices 14 for cleaning equipment, i.e. two horizontal C-bars. One of the bars is mounted at the very top edge of the partition frame 7 while the other one is placed substantially midway between the top and bottom edges, both bars substantially extending from the back frame 6 to the front edge of the partition frame 7. In the narrower second cleaning equipment space 9, on the other side of the partition frame 7, there are similarly two corresponding bars serving as holding devices 14, mounted at the upper edge of the partition 7 and at the middle of its height dimension.

In the third cleaning equipment space 15, corresponding two horizontal C-bars 12 are attached to the back surface 10 of the back frame 6 substantially at the top edge and in the middle of the region.

In addition, the back frame 6 is provided with two push handles 19 fixed to its back surface 10. The handles extend at first perpendicularly backward from the upper corners of the back frame outside the vertical plane defined by the rear edge 4. After this, the bar-like push handles are bent upward and obliquely slightly forward and toward each other, forming substantially straight handgrip parts of the push handles. Thus, the handgrip parts have a significant vertical dimension, so they are readily suited for use by persons of different statures.

The partition frame 7 may also be provided with an aperture 20 in its lower part as depicted with a broken line in figure 3. In this way, a continuous and even space for larger items of material or equipment is formed on the base 1. The continuous base plate is also easier to keep clean.

The drawings represent two cleaning carts of the invention, which can be used in highly versatile ways. The drawings represent only the basic frame structure of the cleaning cart and the cleaning equipment spaces of different sizes provided in it. Bars, hooks and other holding elements and hangers used in the cleaning cart can be mounted and changed according to the practical need in each case. Thus, from the same basic unit, it is possible to produce functional assembly, which additionally can be easily and even daily modified and varied by the customer as desirable.

In the foregoing, the invention has been described by way of example with reference to the attached drawings while different embodiments of the invention are possible in the scope of the inventive idea defined in the claims.

## Claims

1. Cleaning cart for cleaning equipment to be carried along by a cleaner, said cleaning cart comprising of a wheeled frame with spaces for cleaning equipment, **characterized** in that the frame of the cleaning cart comprises of
- a substantially rectangular base (1) having longer left and right side edges (2, 3) and shorter rear edge (4) and front edge (5),
- a back frame (6) mounted in an upright position on the base near the rear edge, and
- a plate-like partition frame (7) perpendicular to the back frame and base, dividing the area in front of the back frame into two unequal parts, a first and a second cleaning equipment space (8, 9).

2. Cleaning cart as defined in claim 1, **characterized** in that the back surface (10) and/or the front surface (11) of the back frame (6) are/is provided with holding devices (12) for cleaning equipment, such as bars, holes and/or hooks.

3. Cleaning cart as defined in claim 1, **characterized** in that at least one and preferably both of the side surfaces (13) of the partition frame (7) is/are provided with holders (14) for cleaning equipment, such as bars, holes and/or hooks.

4. Cleaning cart as defined in claim 1, **characterized** in that the back frame (6) is mounted on the base (1) at a distance from the rear edge (4) of base so that the rear part of the base and the back frame define a third cleaning equipment space (15).

5. Cleaning cart as defined in any one of claims 1 - 4, **characterized** in that the back frame (6) and the partition frame (7) consist of solid and flat planar surfaces.

6. Cleaning cart as defined in claim 5, **characterized** in that the base, back frame and partition frame are coated cellular polystyrene plates.

7. Cleaning cart as defined in any one of claims 1 - 4, **characterized** in that the back frame and the partition frame consist of a perforated structure, such as a net or a perforated plate.

8. Cleaning cart as defined in any one of claims 1 - 4, **characterized** in that the back frame, the partition frame and/or the base consist of a rigid framework.

9. Cleaning cart as defined in claim 8, **characterized** in that the holding devices are mounted on the framework.

10. Cleaning cart as defined in claim 8, **characterized** in that the holding devices for cleaning are mounted on the support plate mounted on the framework.

11. Cleaning cart as defined in claim 1, **characterized** in that the cleaning cart comprises of an extension frame (21) hinged on the front edge (5) of the base (1) so that it can be turned between a service position in which it forms a direct extension of the base and an upright locked position in which it is turned against the front edge of the partition frame.

12. Cleaning cart as defined in claim 1, **characterized** in that the edges (2, 3, 4, 5) of the base are provided with fillers (17)substantially extending through the length of the respective edges.
